# FASCICULE DE BREVET EUROPEEN

(11) **EP 3 564 078 B1**
(45) Date de publication et mention de la délivrance du brevet: **25.08.2021**
(21) Numéro de dépôt: 19171721.4
(22) Date de dépôt: 30.04.2019
(51) Int. Cl.: B60S 1/38, B60S 1/08

(54) **DEFLECTEUR D AIR POUR VEHICULE AUTOMOBILE**
LUFTLEITBLECH FÜR KRAFTFAHRZEUG
AIR DEFLECTOR FOR MOTOR VEHICLE

(30) Priorité: 02.05.2018 FR 1853773
(43) Date de publication de la demande: 06.11.2019
(73) Titulaire: Valeo Systèmes d'Essuyage, 78322 Le Mesnil Saint Denis (FR)
(72) Inventeur: CAILLOT, Gérald, 78322 LE MESNIL SAINT DENIS (FR); JARASSON, Jean-Michel, 78322 LE MESNIL SAINT DENIS (FR); IZABEL, Vincent, 78322 LE MESNIL SAINT DENIS (FR); BILLOT, Philippe, 78322 LE MESNIL SAINT DENIS (FR)
(74) Mandataire: Valeo Visibility

(56) Documents cités:
- DE-A1-102011 089 928
- DE-A1-102012 209 983
- DE-A1-102013 000 869
- FR-A1- 2 671 319
- US-A1- 2011 016 653

## Description

La présente invention concerne le domaine de l'essuyage d'une surface vitrée, et plus particulièrement le domaine des systèmes d'essuyage dédiés aux véhicules automobiles.

Les véhicules automobiles sont couramment équipés d'un système d'essuyage comprenant au moins un balai d'essuyage d'une surface vitrée, telle que par exemple un pare-brise.

Le balai d'essuyage est entraîné, via un bras, par moteur d'entraînement entre une position initiale et une position extrême. La position initiale correspond à une position de repos du balai d'essuyage dans laquelle ce balai d'essuyage est dans une position sensiblement horizontale sur le pare-brise et la position extrême correspond quant à elle à une position active du balai d'essuyage dans laquelle le balai d'essuyage est en position sensiblement verticale sur le pare-brise, le long d'un montant porteur de ce pare-brise. Lors de son mouvement entre cette position initiale et cette position extrême, le balai d'essuyage est configuré pour évacuer l'eau et/ou des salissures présentes sur le pare-brise et qui peuvent gêner la visibilité du conducteur.

Lorsque le système d'essuyage est mis en fonctionnement, celui-ci alterne entre une phase ascendante au cours de laquelle le balai d'essuyage passe de sa position initiale à sa position extrême et une phase descendante au cours de laquelle le balai d'essuyage passe de sa position extrême à sa position initiale.

Les systèmes d'essuyage actuels présentent toutefois un défaut qui intervient lors de ces phases descendantes, notamment à vitesses intermédiaires. En effet, lors de ces phases descendantes, un phénomène d'aspiration de l'eau présente sur le pare-brise, ou d'un liquide de nettoyage projeté pour nettoyer ce pare-brise, peut se former. Ce phénomène d'aspiration est d'autant plus présent qu'un tel liquide - qu'il s'agisse de l'eau ou du liquide de nettoyage - a tendance à s'accumuler entre le balai d'essuyage, lorsqu'il est dans sa position extrême, et le montant délimitant partiellement le pare-brise. Ce phénomène d'aspiration tend à ramener le liquide dans le champ de vision du conducteur, ce qui peut réduire la visibilité de ce dernier et finalement devenir un phénomène dangereux. DE-A-102011089928 montre le préambule de la revendication 1.

La présente invention a pour but de pallier cet inconvénient, en proposant un balai d'essuyage équipé d'un déflecteur d'air capable de limiter, voire d'annihiler ce phénomène d'aspiration.

Un objet de la présente invention concerne ainsi un déflecteur d'air pour balai d'essuyage, le déflecteur d'air comprenant au moins une première partie qui émerge d'une deuxième partie. Selon l'invention, au moins la première partie du déflecteur d'air comprend au moins un organe de déformation configuré pour entrainer la déformation de la première partie du déflecteur d'air, et cet organe de déformation comprend au moins un élément électriquement conducteur.

On entend par « la première partie émerge de la deuxième partie » le fait que cette première partie présente une portion commune avec la deuxième partie et que cette première partie s'étend en éloignement de la deuxième partie à partir de cette portion commune. Par exemple, cette première partie et cette deuxième partie forment un ensemble monobloc, c'est-à-dire un ensemble qui ne peut être séparé sans occasionner la détérioration de l'une ou l'autre de ces parties.

La deuxième partie du déflecteur d'air comprend au moins un moyen d'accrochage de ce déflecteur d'air sur le balai d'essuyage, et plus précisément sur un support de ce balai d'essuyage. La deuxième partie est ainsi une base du déflecteur d'air. La première partie s'étend selon une direction transversale à l'axe longitudinal d'extension du déflecteur d'air. Cette première partie est ainsi une aile qui, vue en coupe transversale, se dresse depuis la deuxième partie.

Selon l'invention, la première partie du déflecteur d'air s'étend depuis la deuxième partie du déflecteur d'air et comprend une arête libre, la première partie du déflecteur d'air étant configurée pour se déformer entre une première position et une deuxième position, une première distance mesurée entre un point de l'arête libre et un point de la deuxième partie du déflecteur d'air lorsque la première partie est dans sa première position étant inférieure à une deuxième distance mesurée entre le même point de l'arête libre et le même point de la deuxième partie du déflecteur d'air lorsque la première partie est dans sa deuxième position.

Autrement dit, lorsque la première partie du déflecteur d'air est dans sa première position, son arête libre est plus proche de la deuxième partie que lorsque cette première partie est dans sa deuxième position. En d'autres termes, dans sa première position, la première partie est abaissée ce qui permet de modifier les conditions aérodynamiques habituellement observées en aval de cette première partie par rapport à un sens de circulation d'un flux d'air le long du déflecteur d'air. Ces conditions aérodynamiques particulières ont notamment pour effet d'entrainer une accumulation d'eau et/ou de liquide lave-glace entre le balai d'essuyage dans sa position extrême et un montant d'un pare-brise au contact duquel est agencé ce balai d'essuyage lorsque le balai d'essuyage est dans une phase ascendante et d'entrainer un phénomène d'aspiration de cette eau et/ou ce liquide lave-glace accumulés lorsque le balai d'essuyage entame la phase descendante. Avantageusement, le déflecteur d'air selon la présente invention permet ainsi de limiter, voire de supprimer, ce phénomène d'aspiration qui tend habituellement à ramener de l'eau et/ou du liquide lave-glace ainsi accumulés, dans le champ de vision du conducteur. Mais ces phénomènes d'accumulation et d'aspiration des liquides n'ont lieu que pour des vitesses intermédiaires et tendent à disparaître par exemple lorsque le véhicule roule à haute vitesse, par exemple une vitesse supérieure à 120km/h, ou à basse vitesse, par exemple une vitesse inférieure à 80km/h. Avantageusement, en dehors de cette plage de valeurs, la présente invention permet de déformer la première partie du déflecteur d'air vers sa deuxième position dans laquelle elle est configurée pour transformer une pression appliquée par le flux d'air circulant le long du déflecteur d'air en une force d'appui du balai d'essuyage sur le pare-brise.

Selon l'invention, l'organe de déformation est noyé dans la masse du déflecteur d'air. Cette caractéristique est reconnaissable en ce que l'organe de déformation est alors agencé au contact du matériau dans lequel est réalisé le déflecteur d'air et est totalement entouré par ce matériau. Par exemple le déflecteur d'air et l'organe de déformation peuvent être co-extrudés ou co-moulés. En d'autres termes, le déflecteur d'air et l'organe de déformation forment alors un ensemble monobloc, c'est-à-dire un ensemble qui ne peut être séparé sans entrainer la détérioration du déflecteur d'air et/ou de l'organe de déformation.

Selon une alternative non revendiquée, l'organe de déformation peut être rapporté sur la première partie du déflecteur d'air. Autrement dit, l'organe de déformation et le déflecteur d'air sont réalisés indépendamment l'un de l'autre, puis l'organe de déformation est fixé sur le déflecteur d'air, et plus précisément sur la première partie de ce déflecteur d'air. Par exemple, cet organe de déformation peut être collé sur la première partie du déflecteur d'air.

Selon un premier mode de réalisation de la présente invention, l'organe de déformation comprend un matériau piézoélectrique. Plus précisément, c'est l'élément électriquement conducteur de l'organe de déformation qui comprend ce matériau piézoélectrique, c'est-à-dire un matériau configuré pour se déformer lorsqu'on lui applique un courant électrique et pour reprendre sa forme initiale lorsqu'il n'est plus parcouru par ce courant électrique. Autrement dit, selon ce premier mode de réalisation de la présente invention, la déformation du matériau piézoélectrique résulte en une déformation de l'élément électriquement conducteur qui, à son tour, permet d'entrainer une déformation de la première partie du déflecteur d'air. Ce matériau piézoélectrique peut former tout ou partie de l'élément électriquement conducteur de l'organe de déformation. On comprend que, selon ce premier mode de réalisation, l'organe de déformation de la première partie du déflecteur d'air et l'élément électriquement conducteur ne forment qu'une seule pièce.

Selon un deuxième mode de réalisation de la présente invention, l'élément électriquement conducteur de l'organe de déformation est un élément électrique chauffant, l'organe de déformation comprend en outre un organe déformable et l'élément électrique chauffant est disposé au contact de cet organe déformable. Selon une caractéristique de ce deuxième mode de réalisation, l'organe déformable contre lequel l'élément électrique chauffant prend appui comprend un matériau à mémoire de forme. Par exemple l'élément électrique chauffant peut être un film électrique chauffant ou un réseau électrique chauffant. Avantageusement, le matériau à mémoire de forme est configuré pour se déformer lorsqu'il atteint une température dite « température critique » et pour reprendre sa forme initiale lorsque sa température redescend en dessous de cette température critique. Selon ce deuxième mode de réalisation, la température du matériau à mémoire de forme est régulée par l'élément électrique chauffant. On comprend donc que, selon ce deuxième mode de réalisation, l'élément électriquement conducteur entraine, en chauffant ou en refroidissant, la déformation du matériau à mémoire de forme et que c'est la déformation de ce matériau à mémoire de forme qui entraine, à son tour, la déformation de la première partie du déflecteur d'air.

Selon une variante de ce deuxième mode de réalisation de la présente invention, l'élément électrique chauffant et l'organe déformable forment une seule et unique pièce. Autrement dit, l'organe de déformation de la première partie du déflecteur comprend seulement un matériau à mémoire de forme configuré pour chauffer lorsqu'il est parcouru par un courant électrique et pour se déformer lorsqu'il atteint sa température critique. On comprend alors que, selon cette variante de réalisation, l'application du courant électrique à l'élément électriquement conducteur entraine une montée en température de cet élément électriquement conducteur qui résulte en une déformation de ce dernier et qui permet, in fine, la déformation de cet élément électriquement conducteur, et donc la déformation de la première partie du déflecteur d'air selon l'invention.

Selon l'invention, le déflecteur d'air présente ainsi un état de repos et un état activé. L'état activé de ce déflecteur d'air correspond à un état dans lequel l'organe de déformation est activé, c'est-à-dire un état dans lequel l'élément électriquement conducteur formant tout ou partie de l'organe de déformation est parcouru par un courant électrique de sorte à entrainer la déformation de la première partie du déflecteur d'air. L'état de repos correspond quant à lui à un état dans lequel la circulation de courant électrique dans l'élément électriquement conducteur est interrompue, de sorte que le matériau à mémoire de forme ou le matériau piézoélectrique reprenne une position initiale. Selon l'un ou l'autre des modes de réalisation évoqués ci-dessus, l'état de repos du déflecteur d'air et l'état activé de ce déflecteur d'air peuvent, respectivement, correspondre alternativement à la première position ou à la deuxième position. Autrement dit, si l'état de repos correspond à la première position, l'activation de l'organe de déformation entraine la déformation de cette première partie vers la deuxième position. A l'inverse, si l'état de repos correspond à la deuxième position, l'activation de l'organe de déformation entraine la déformation de la première partie du déflecteur d'air vers la première position.

Selon une caractéristique de la présente invention, le déflecteur d'air s'étend majoritairement selon un axe longitudinal et l'organe de déformation s'étend majoritairement selon une direction d'extension parallèle à cet axe longitudinal. On entend par « l'organe de déformation s'étend majoritairement selon une direction d'extension parallèle à l'axe longitudinal », le fait que l'élément électriquement conducteur et/ou l'organe déformable s'étendent selon la direction d'extension parallèle à l'axe longitudinal. L'organe de déformation peut s'étendre longitudinalement sur une portion du déflecteur d'air ou sur la totalité de ce déflecteur d'air.

L'invention concerne également un balai d'essuyage comprenant au moins un organe de flexion, une lame d'essuyage destinée à venir en appui contre une surface vitrée et un déflecteur d'air selon l'invention, et dans lequel l'organe de flexion s'étend au moins en partie dans la deuxième partie du déflecteur d'air.

Le balai d'essuyage selon la présente invention peut comprendre en outre au moins un support porteur de l'organe de flexion.

Selon une caractéristique de l'invention, le déflecteur d'air peut comprendre au moins deux crochets configurés pour enserrer le support. Plus exactement, ces crochets sont ménagés sur la deuxième partie de ce déflecteur d'air. Alternativement, le déflecteur d'air peut être issu de matière avec la lame d'essuyage, un ensemble formé par ce déflecteur d'air et la lame d'essuyage comprenant alors au moins deux encoches configurées pour recevoir, chacune, un organe de flexion du balai d'essuyage.

L'invention concerne encore un système d'essuyage pour un véhicule automobile comprenant au moins un balai d'essuyage selon l'invention et au moins une unité de contrôle configurée pour autoriser ou interdire la circulation d'un courant électrique dans l'élément électriquement conducteur de l'organe de déformation. En d'autres termes, l'unité de contrôle permet d'activer ou non l'organe de déformation et donc de piloter la déformation de la première partie du déflecteur d'air vers sa première position ou vers sa deuxième position.

La présente invention concerne également un véhicule automobile comprenant un système d'essuyage selon l'invention. Par exemple la surface vitrée contre laquelle la lame d'essuyage est destinée à venir en appui est le pare-brise du véhicule.

Selon l'invention, l'élément électriquement conducteur de l'organe de déformation peut être alimenté par un faisceau électrique issu du véhicule. Alternativement, on pourra prévoir une alimentation électrique propre à cet élément électriquement conducteur.

L'invention concerne enfin un procédé de déformation de la première partie du déflecteur d'air intégré au système d'essuyage selon l'invention, au cours duquel l'unité de contrôle reçoit au moins une première information relative à une vitesse de déplacement d'un véhicule comprenant le système d'essuyage, le procédé comprenant une première étape au cours de laquelle l'unité de contrôle compare cette première information à une valeur basse et à une valeur haute et une deuxième étape au cours de laquelle l'unité de contrôle envoie une instruction autorisant une circulation du courant électrique dans l'élément électriquement conducteur quand la première information est supérieure à la valeur basse et inférieure à la valeur haute, l'élément électriquement conducteur n'étant pas alimenté quand la première information est inférieure à la valeur basse ou supérieure à la valeur haute.

Tel que précédemment évoqué le phénomène d'accumulation des liquides qui peut, lorsque ces derniers sont ensuite aspirés et ramenés dans le champ de vision du conducteur, être dangereux, ne se produit que dans des plages de vitesses définies. Ainsi, la présente invention permet avantageusement de conditionner la déformation de la première partie du déflecteur d'air à la vitesse de déplacement du véhicule de sorte que les liquides ne puissent pas s'accumuler, quelle que soit la vitesse à laquelle se déplace le véhicule de l'invention. Autrement dit, selon l'invention, la déformation de la première partie du déflecteur d'air est liée à la vitesse de déplacement du véhicule à un instant donné.

Par exemple, la valeur basse à laquelle l'unité de contrôle compare la première information relative à la vitesse du véhicule peut correspondre à une vitesse de 80 km/h et la valeur haute à laquelle l'unité de contrôle compare la première information relative à la vitesse du véhicule peut correspondre à une vitesse de 120 km/h.

Ces valeurs haute et basse sont susceptibles de varier en fonction du type de véhicule ainsi que du galbe du pare-brise d'un tel véhicule. Il est entendu que ces valeurs ne sont données qu'à titre d'exemple et qu'elles peuvent être modifiées sans nuire à l'invention.

Il est entendu que le procédé qui vient d'être décrit n'est applicable, tel que décrit, que lorsque l'état de repos du déflecteur d'air correspond à la deuxième position de la première partie de ce déflecteur d'air et que l'état activé de ce déflecteur d'air correspond à la première position de cette première partie du déflecteur d'air. Alternativement, on pourra donc prévoir que, lorsque l'état de repos du déflecteur d'air correspond à la première position de la première partie de ce déflecteur d'air et que l'état activé du déflecteur d'air correspond à la deuxième position de cette première partie du déflecteur d'air, l'unité de contrôle est configurée pour envoyer une instruction autorisant la circulation du courant électrique dans l'élément électriquement conducteur quand la première information est inférieure à la valeur basse ou supérieure à la valeur haute, et que l'élément électriquement conducteur n'est pas alimenté quand la première information est supérieure à la valeur basse et inférieure à la valeur haute.

Optionnellement, préalablement à la deuxième étape autorisant la circulation du courant électrique dans l'élément électriquement conducteur, l'unité de contrôle reçoit une deuxième information relative à une position angulaire du balai d'essuyage sur la surface vitrée. Le procédé comprend alors une troisième étape au cours de laquelle l'unité de contrôle compare cette deuxième information à une plage de valeurs angulaires, la deuxième étape au cours de laquelle l'unité de contrôle envoie une instruction autorisant une circulation du courant électrique dans l'élément électriquement conducteur étant conditionnée à une correspondance entre la deuxième information et la plage de valeurs angulaires. Selon l'invention, la plage de valeurs angulaires avec laquelle est comparée la deuxième information peut par exemple correspondre à un secteur angulaire du pare-brise situé entre le balai d'essuyage dans sa position extrême et la zone du pare-brise au niveau de laquelle peuvent s'accumulés l'eau et/ou le liquide lave-glace. On comprend alors que la première partie du déflecteur d'air est ainsi avantageusement déformée vers sa première position, uniquement dans ce secteur angulaire de la surface vitrée situé à proximité de la zone de cette surface vitrée au niveau de laquelle ont lieu les phénomènes d'accumulation et d'aspiration évoqués ci-dessus et qui peuvent gêner la visibilité du conducteur. En dehors de ce secteur angulaire, le déflecteur d'air peut ainsi être maintenu dans sa deuxième position et ainsi remplir sa fonction de plaquage du balai d'essuyage sur la surface vitrée.

D'autres détails, caractéristiques et avantages ressortiront plus clairement à la lecture de la description détaillée donnée ci-après à titre indicatif en relation avec les différents exemples de réalisation illustrés sur les figures suivantes :
- la figure 1 est une vue d'ensemble d'un système d'essuyage comprenant un balai d'essuyage équipé d'un déflecteur d'air selon la présente invention ;
- la figure 2 représente de façon schématique le système d'essuyage illustré sur la figure 1 en situation d'essuyage d'un pare-brise d'un véhicule ;
- la figure 3 représente le balai d'essuyage illustré sur la figure 1, vu selon une coupe verticale transversale ;
- les figures 4 et 5 illustrent le déflecteur d'air selon l'invention, vu en coupe transversale, selon un premier mode de réalisation de la présente invention ;
- les figures 6 et 7 illustrent le déflecteur d'air selon l'invention, vu en coupe transversale, selon un deuxième mode de réalisation de la présente invention ;
- la figure 8 illustre de façon schématique, sous forme synoptique, un procédé de déformation d'une première partie du déflecteur d'air selon l'invention.

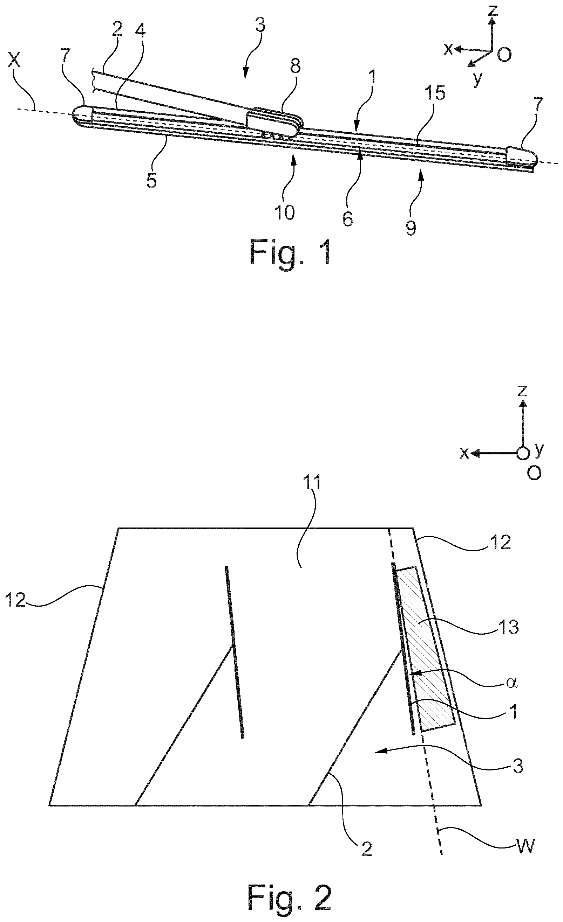

Dans la suite de la description, les dénominations longitudinales, verticales ou transversales se réfèrent à l'orientation d'un déflecteur d'air intégré à un balai d'essuyage. La direction longitudinale correspond à une direction d'extension longitudinale du déflecteur d'air, cette direction longitudinale étant parallèle à un axe Ox d'un repère orthonormé, par exemple représenté à la figure 1. Une direction transversale correspond à une direction parallèle à un axe Oy de ce repère orthonormé, l'axe Oy étant perpendiculaire à l'axe Ox. Une direction verticale correspond à une direction parallèle à un axe Oz du repère orthonormé, l'axe Oz étant perpendiculaire à l'axe Ox et à l'axe Oy.

Les coupes transversales mentionnées ci-après sont quant à elles réalisées selon des plans de coupe perpendiculaires à l'axe Ox du repère orthonormé et dans lesquelles s'inscrivent les axes Oy et Oz de ce repère orthonormé.

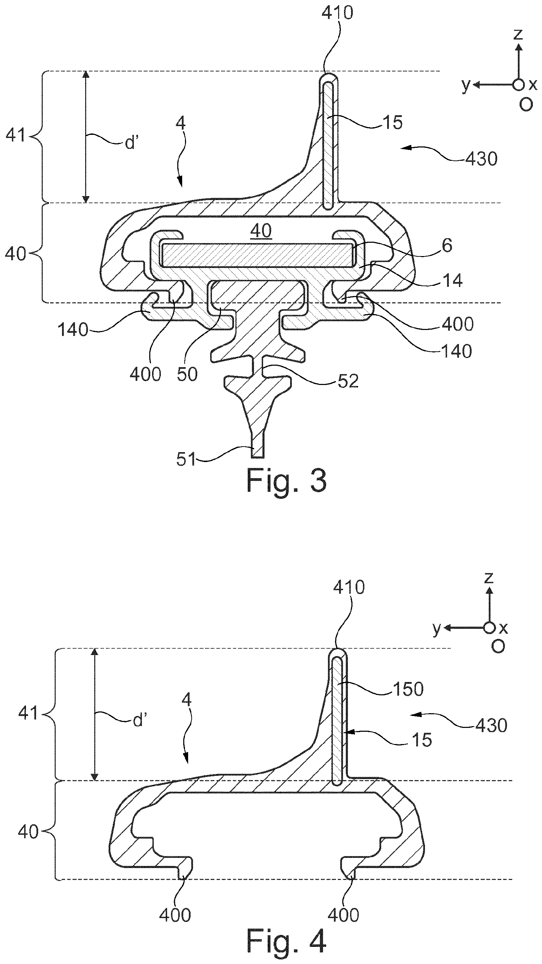

Les figures 3 à 7 décrites ci-après représentent des coupes transversales du déflecteur d'air seul, ou intégré au balai d'essuyage, et réalisées selon un premier ou un deuxième mode de réalisation de la présente invention.

Sur la figure 1 est représenté un système d'essuyage 3 configuré pour être installé sur un véhicule automobile et permettant d'évacuer une eau et/ou des salissures, par exemple grâce à un liquide lave-glace, présentes sur une surface vitrée, notamment un pare-brise, de ce véhicule automobile. Le système d'essuyage 3 comprend un bras d'entraînement 2 apte à effectuer un mouvement de va-et-vient angulaire le long de ce pare-brise.

Le système d'essuyage 3 comprend aussi un balai d'essuyage 1 qui s'étend selon un axe longitudinal X parallèle à l'axe Ox. Le balai d'essuyage 1 comprend au moins un déflecteur d'air 4, une lame d'essuyage 5, au moins un organe de flexion 6, également appelé vertèbre, et deux embouts d'extrémités 7 respectivement agencés à chacune des extrémités longitudinales du balai d'essuyage 1. L'organe de flexion 6 prend la forme d'une bande d'extension longitudinale parallèle à l'axe Ox et qui s'étend majoritairement dans un plan Oxy.

La lame d'essuyage 5 est la pièce du balai d'essuyage 1 en contact direct avec la surface vitrée pour évacuer l'eau et/ou les salissures présentes sur cette dernière. Le déflecteur d'air 4, la lame d'essuyage 5 et l'organe de flexion 6 forment un ensemble semi-rigide 9 qui est porté par un dispositif de connexion 10, interposé entre le bras d'entraînement 2 et l'ensemble semi-rigide 9. Le dispositif de connexion 10 assure une liaison mécanique entre une partie terminale 8 du bras d'entraînement 2 et le balai d'essuyage 1 et permet ainsi de séparer le balai d'essuyage 1 du bras d'entraînement 2, en vue d'un remplacement du balai d'essuyage 1.

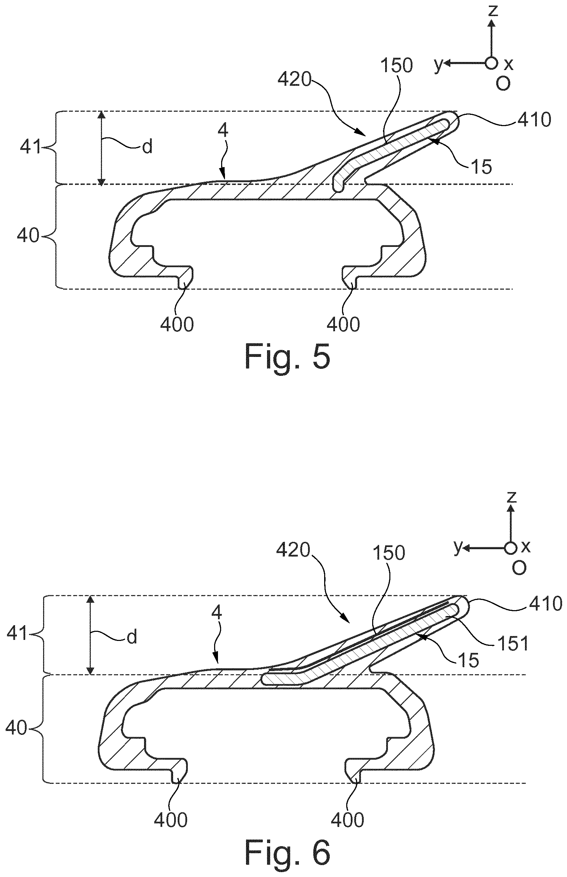

Le déflecteur d'air 4 est quant à lui prévu pour transformer une pression appliquée par un flux d'air circulant le long de la surface vitrée du véhicule automobile en une force d'appui du balai d'essuyage 1 contre cette surface vitrée. Le déflecteur d'air 4 s'étend principalement parallèlement à l'axe longitudinal X. Le déflecteur d'air 4 selon l'invention comprend également au moins un organe de déformation 15 configuré pour permettre la déformation du déflecteur d'air 4 essentiellement entre une première position 420 et une deuxième position 430 tel que décrit ci-dessous. Cette première position 420 est par exemple représentée sur les figures 5 et 6 tandis que la deuxième position 430 de ce déflecteur d'air 4 est quant à elle illustrée sur les figures 3, 4 et 7. Tel que représenté sur la figure 1, cet organe de déformation 15 s'étend majoritairement selon une direction d'extension parallèle à l'axe longitudinal.

Selon l'invention, cet organe de déformation 15 comprend au moins un élément électriquement conducteur et est plus particulièrement configuré pour permettre la déformation d'une première partie du déflecteur d'air 4. Tel que cela sera plus amplement détaillé ci-après, le système d'essuyage comprend en outre une unité de contrôle configurée pour autoriser ou non la circulation d'un courant électrique dans cet élément électriquement conducteur et ainsi permettre la déformation du déflecteur d'air 4 vers sa première position 420 ou vers sa deuxième position 430. Selon l'invention, l'organe de déformation 15 est noyé dans la masse du déflecteur d'air 4, c'est-à-dire que cet organe de déformation 15 et ce déflecteur d'air 4 sont alors obtenus simultanément, par exemple par co-extrusion ou par co-moulage, et forment un ensemble monobloc, c'est-à-dire un ensemble que ne peut être séparé sans entrainer la détérioration de l'organe de déformation 15 ou du déflecteur d'air 4.

Selon une variante non revendiquée, l'organe de déformation et le déflecteur d'air peuvent être réalisés indépendamment l'un de l'autre, l'organe de déformation étant alors ultérieurement rapporté sur le déflecteur d'air. Par exemple, cet organe de déformation peut être collé sur le déflecteur d'air.

Cet organe de déformation 15 peut s'étendre sur toute ou partie d'une dimension longitudinale du déflecteur 4, cette dimension longitudinale du déflecteur d'air 4 étant mesurée entre les deux embouts d'extrémités 7 parallèlement à l'axe longitudinal X. L'alimentation électrique de l'élément électriquement conducteur peut par exemple être réalisée par un faisceau électrique issu du véhicule. Alternativement, on pourra prévoir une alimentation électrique spécifiquement dédiée à l'alimentation de cet élément électriquement conducteur.

Le bras d'entrainement 2 est motorisé et permet de générer un mouvement de va et vient du balai d'essuyage 1. Ce balai d'essuyage 1 se déplace alors entre une position initiale dans laquelle il est dans une position sensiblement horizontale, c'est-à-dire sensiblement parallèle au plan Oxy, et une position extrême dans laquelle il est dans une position sensiblement verticale, c'est-à-dire sensiblement parallèle au plan Oyz. Cette position extrême est par exemple illustrée sur la figure 2 et correspond à une position dans laquelle le balai d'essuyage 1 est aligné, ou sensiblement aligné, avec un montant 12 porteur du pare-brise. Dans la suite de la description, les termes « phase ascendante » se réfèrent à une situation dans laquelle le balai d'essuyage 1 passe de sa position initiale à sa position extrême et les termes « phase descendante » se réfèrent quant à eux à une situation dans laquelle le balai d'essuyage 1 passe de sa position extrême à sa position initiale.

Cette figure 2 illustre ainsi le pare-brise, référencé ici 11, d'un véhicule automobile sur lequel est posé le balai d'essuyage 1 qui vient d'être décrit. Tel qu'illustré, ce pare-brise 11 est délimité par au moins deux montants 12 du véhicule. Lors de la phase ascendante, le balai d'essuyage 1 racle le pare-brise 11 de sorte à amener l'eau et/ou le liquide lave-glace présents sur ce pare-brise 11 vers l'un des montants 12 du véhicule. La forme du déflecteur d'air 4, lorsque celui-ci est dans sa deuxième position, génère des conditions aérodynamiques particulières, notamment dans une zone 13 située entre le balai d'essuyage 1 dans sa position extrême et ce montant 12 du véhicule. Plus particulièrement, la forme du déflecteur d'air 4 génère une dépression d'air en aval de ce déflecteur d'air 4 par rapport à un sens de circulation du flux d'air sur le pare-brise qui tend à favoriser une accumulation de l'eau et/ou du liquide lave-glace déplacés par le balai d'essuyage 1 dans cette zone 13. Il en résulte que, lorsque le balai d'essuyage 1 entame la phase descendante, un phénomène d'aspiration de ces liquides accumulés par le balai d'essuyage 1 peut se produire, ramenant alors ces liquides dans le champ de vision du conducteur. Tel que cela sera plus amplement détaillé ci-dessous, le déflecteur d'air 4 selon l'invention est configuré pour, lorsqu'il est dans sa première position, modifier ces conditions aérodynamiques de sorte à éviter que l'eau et/ou le liquide lave-glace ne s'accumulent dans la zone 13 et également à supprimer le phénomène d'aspiration de ces liquides. Entre autres, et tel que cela sera plus amplement détaillé ci-après, la présente invention permet de déformer la première partie 41 du déflecteur d'air 4 vers sa première position 420 lorsque le balai d'essuyage 1 est dans un secteur angulaire α du pare-brise 11 situé entre sa position extrême et une position W bordant la zone 13. En d'autres termes, ce secteur angulaire α correspond à un secteur angulaire du pare-brise 11 situé entre le balai d'essuyage 1 dans sa position extrême et cette zone 13.

La fonction de transformation de la pression appliquée par le flux d'air circulant le long du pare-brise 11 en une force d'appui du balai d'essuyage 1 contre ce pare-brise 11 est quant à elle assurée lorsque le déflecteur d'air 4 est dans sa deuxième position.

Autrement dit, la présente invention permet d'assurer au conducteur une visibilité optimale tout au long de l'essuyage tout en permettant d'assurer la fonction première d'un tel déflecteur d'air 4, à savoir plaquer le balai d'essuyage 1 contre le pare-brise 11.

La figure 3 est une vue en coupe transversale du balai d'essuyage 1 précédemment décrit et illustré sur la figure 1, c'est-à-dire une coupe réalisée selon un plan dans lequel s'inscrivent les axes Oy et Oz du repère orthonormé illustré sur les figures. Le déflecteur d'air 4 représenté sur cette figure 3 intègre des caractéristiques communes aux différents modes de réalisation qui vont être décrits ci-après en référence aux figures 4 à 7.

Sur cette figure 3 sont ainsi représentés un support 14 qui porte la lame d'essuyage 5, l'organe de flexion 6 et le déflecteur d'air 4 selon l'invention. Tel que représenté, la lame d'essuyage 5 comprend un talon 50 par laquelle elle est maintenue dans le support 14 et une zone de frottement 51 destinée à venir au contact du pare-brise à essuyer. Afin d'optimiser le balayage de ce pare-brise, la zone de frottement 51 est reliée au talon 50 par une charnière 52 de sorte que cette zone de frottement 51 est mobile par rapport au talon 50.

L'organe de flexion 6 prend la forme d'une bande d'extension longitudinale de section transversale, c'est-à-dire une section vue dans le plan de coupe de la figure 3, sensiblement rectangulaire. Selon l'exemple illustré ici, le balai d'essuyage 1 comprend un unique organe de flexion 6. Alternativement, on pourra prévoir deux organes de flexion.

Le déflecteur d'air 4 selon la présente invention comprend quant à lui une deuxième partie 40 et une première partie 41. Cette deuxième partie 40 et cette première partie 41 forment un ensemble monobloc, c'est-à-dire un ensemble qui ne peut être séparé sans entrainer la détérioration de la deuxième partie 40 et/ou de la première partie 41.

Tel qu'illustré, la première partie 41 du déflecteur d'air 4 s'étend selon une direction transversale à l'axe longitudinal. Selon un exemple illustré ici, cette première partie 41 du déflecteur d'air 4 s'étend plus particulièrement selon une direction sensiblement verticale, c'est-à-dire parallèle à l'axe Oz. Cette première partie 41 du déflecteur d'air 4 comprend une arête libre 410 qui représente le point du déflecteur d'air 4 le plus éloigné du pare-brise du véhicule sur lequel est destiné à être agencé un balai d'essuyage 1 comprenant un tel déflecteur d'air 4. Avantageusement, c'est cette première partie 41 du déflecteur d'air 4 qui permet de transformer la pression appliquée par le flux d'air circulant sur le pare-brise en une force d'appui configurée pour plaquer le balai d'essuyage 1 sur ce pare-brise.

Selon l'exemple illustré ici, la deuxième partie 40 comprend quant à elle deux crochets 400 configurés pour assurer le maintien du déflecteur d'air 4 sur le support 14. Tel qu'illustré, ce support 14 comprend ainsi deux portions 140 de formes complémentaires à celles des crochets 400 et destinées à recevoir ces derniers. On remarque également que cette deuxième partie 40 comprend un évidement 401 dans lequel sont logés au moins l'organe de flexion 6 et une partie du support 14 porteuse de cet organe de flexion 6. Il est entendu que cette configuration particulière du balai d'essuyage n'est donnée qu'à titre d'exemple et que toute autre configuration compatible avec l'invention peut être envisagée. Par exemple, on pourra prévoir que la deuxième partie prenne la forme d'un fourreau dans lequel est glissé l'organe de flexion. Selon un autre exemple, la deuxième partie est formée par une face du déflecteur d'air sur laquelle est solidarisé l'organe de flexion, par exemple par collage.

Tel que représenté, la première partie 41 du déflecteur d'air 4 émerge de la deuxième partie 40 de sorte que cette première partie 41 et la deuxième partie 40 présentent une portion commune depuis laquelle la première partie 41 du déflecteur d'air 4 s'étend en éloignement de la deuxième partie 40.

Ainsi, la deuxième partie 40 du déflecteur d'air 4 forme une base de ce déflecteur d'air 4 et la première partie 41 forme une aile de ce déflecteur d'air 4 qui, vue en coupe transversale, se dresse depuis la deuxième partie 40. Tel que précédemment évoqué, le déflecteur d'air 4 selon l'invention comprend en outre l'organe de déformation 15 configuré pour permettre la déformation de la première partie 41 de ce déflecteur d'air 4 entre la première position et la deuxième position. Selon l'invention, une première distance d mesurée entre un point de l'arête libre 410 de la première partie 41 et un point de la deuxième partie 40 lorsque la première partie 41 est dans sa première position est inférieure à une deuxième distance d' mesurée entre le même point de l'arête libre 410 de la première partie 41 et le même point de la deuxième partie 40 lorsque la première partie 41 est dans sa deuxième position.

Selon l'exemple illustré sur la figure 3, l'organe de déformation 15 s'étend sur toute une dimension verticale de la première partie 41, c'est-à-dire une dimension de cette première partie 41 mesurée entre la deuxième partie 40 du déflecteur d'air 4 et l'arête libre 410 de cette première partie 41. Il est entendu qu'il ne s'agit que d'un exemple et que cet organe de déformation 15 pourrait présenter une dimension verticale inférieure à la dimension verticale de la première partie 41 sans sortir du contexte de l'invention. On remarque également que l'organe de déformation 15 peut partiellement s'étendre dans la deuxième partie 40 de ce déflecteur d'air 4.

Il est entendu que la description qui vient d'être faite du balai d'essuyage n'est donnée qu'à titre d'exemple. Alternativement, on pourra par exemple prévoir que le balai d'essuyage comprenne deux organes de flexion. Selon un exemple non illustré ici, ces deux organes de flexion peuvent par exemple être reçu dans des espaces ménagés à cet effet dans le talon de la lame d'essuyage et dans le déflecteur d'air, et plus précisément dans la deuxième partie de ce déflecteur d'air, le balai d'essuyage ne comprenant alors plus le support décrit ci-dessus. Selon encore un autre exemple non illustré ici, le déflecteur d'air et la lame d'essuyage peuvent former un ensemble monobloc, c'est-à-dire un ensemble que ne peut être séparé sans entrainer la détérioration du déflecteur d'air ou de la lame d'essuyage. Selon cet autre exemple de réalisation, les deux organes de flexion sont alors respectivement reçus dans deux encoches ménagées dans le déflecteur d'air et plus particulièrement dans la deuxième partie de ce déflecteur d'air. Enfin, le déflecteur d'air selon l'invention peut également comprendre au moins un canal de distribution d'un liquide lave-glace destiné au nettoyage du pare-brise sur lequel se déplace le balai d'essuyage concerné.

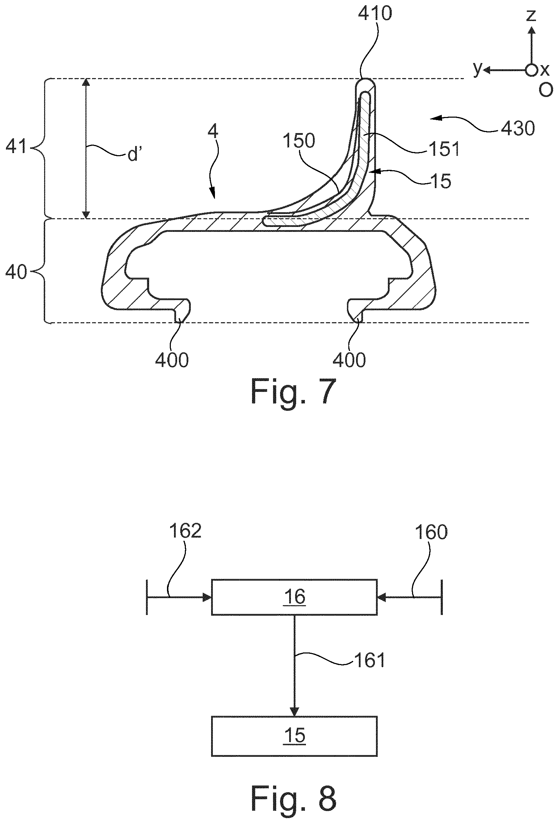

Les figures 4 et 5 illustrent, vu en coupe transversale, le déflecteur d'air 4 selon un premier mode de réalisation de la présente invention. Les figures 6 et 7 illustrent quant à elle, selon une coupe transversale, le déflecteur d'air 4 selon un deuxième mode de réalisation de la présente invention.

Les figures 4 et 6 illustrent, chacune, un état de repos du déflecteur d'air 4 tandis que les figures 5 et 7 illustrent quant à elles, chacune, un état activé de ce déflecteur d'air 4. Selon l'invention, l'état activé de ce déflecteur d'air 4 correspond à un état dans lequel l'organe de déformation 15 a été activé, c'est-à-dire un état dans lequel l'élément électriquement conducteur 150 de cet organe de déformation 15 est parcouru par le courant électrique de sorte à entrainer la déformation de la première partie 41 de ce déflecteur d'air 4. L'état de repos correspond quant à lui à un état dans lequel la circulation de courant électrique dans l'élément électrique conducteur 150 est interrompue de sorte que l'organe de déformation 15 reprend une position initiale. Selon l'exemple illustré sur les figures 4 et 5, l'état de repos du déflecteur d'air 4 correspond à la deuxième position 430 et son état activé correspond quant à lui à la première position 420. Selon l'exemple illustré sur les figures 6 et 7, l'état de repos du déflecteur d'air 4 correspond à la première position 420 et son état activé correspond quant à lui à la deuxième position 430.

Selon le premier mode de réalisation illustré sur les figures 4 et 5, l'élément électriquement conducteur 150 de l'organe de déformation 15 comprend un matériau piézoélectrique, c'est-à-dire un matériau configuré pour se déformer lorsqu'il est parcouru par un courant électrique. Selon un exemple de la présente invention illustré ici, le matériau piézoélectrique forme la totalité de cet élément électriquement conducteur 150. Selon une variante non illustrée, le matériau piézoélectrique ne représente qu'une portion de cet élément électriquement conducteur.

Tel que précédemment évoqué, le système d'essuyage selon l'invention comprend l'unité de contrôle configurée pour permettre la déformation de la première partie 41 du déflecteur d'air 4 vers sa première position 420 ou vers sa deuxième position 430. Ainsi, selon la variante de ce premier mode de réalisation illustrée ici, lorsque l'unité de contrôle autorise la circulation du courant électrique dans l'élément électriquement conducteur 150, ce dernier se déforme de sorte à ce que la première partie 41 du déflecteur d'air 4 passe de sa deuxième position 430 à sa première position 420. A l'inverse, lorsque l'unité de contrôle n'autorise pas cette circulation de courant électrique dans l'élément électriquement conducteur 150, celui-ci reprend sa position initiale et la première partie 41 du déflecteur 4 passe de sa première position 420 à sa deuxième position 430.

On comprend donc que, selon ce premier mode de réalisation de la présente invention, l'organe de déformation 15 de la première partie 41 du déflecteur d'air 4 et l'élément électriquement conducteur 150 ne forment qu'une seule et même pièce.

Selon le deuxième mode de réalisation illustré sur les figures 6 et 7, l'élément électriquement conducteur 150 de l'organe de déformation 15 est réalisé par un élément électrique chauffant et l'organe de déformation 15 comprend en outre un organe déformable 151. Tel qu'illustré sur ces figures 6 et 7, l'élément électrique chauffant est avantageusement agencé au contact de l'organe déformable 151.

Selon ce deuxième mode de réalisation cet organe déformable 151 comprend un matériau à mémoire de forme, c'est-à-dire un matériau ayant pour propriété de se déformer lorsqu'il atteint une température définie, appelée « température critique », et de reprendre sa position initiale lorsque qu'il refroidit en dessous de cette température critique. Avantageusement, l'élément électrique chauffant est apte à se déformer de sorte à ce qu'il puisse suivre la déformation de l'organe déformable 151 et ne gêne pas la déformation de la première partie 41 du déflecteur d'air 4. Par exemple cet élément électrique chauffant peut être un film électrique chauffant ou un réseau électrique chauffant agencé en appui contre l'organe déformable 151.

Ainsi, selon une variante de ce deuxième mode de réalisation illustrée ici, lorsque l'unité de contrôle autorise la circulation du courant électrique dans l'élément électriquement conducteur 150, celui-ci chauffe, permettant ainsi, de par leur proximité, au matériau à mémoire de forme de l'organe déformable 151 d'atteindre sa température critique et donc de se déformer. On comprend que cette déformation du matériau à mémoire de forme de l'organe déformable 151 entraine alors la déformation de la première partie 41 du déflecteur d'air 4 qui passe de sa première position 420 à sa deuxième position 430. De façon analogue, lorsque l'unité de contrôle n'autorise pas cette circulation de courant électrique dans l'élément électriquement conducteur 150, celui-ci refroidit entrainant également un refroidissement progressif du matériau à mémoire de forme de l'organe déformable 151 de sorte que ce dernier reprenne sa position initiale. Il en résulte que la première partie 41 du déflecteur 4 passe alors de sa deuxième position 430 à sa première position 420.

Selon une autre variante de ce deuxième mode de réalisation non illustrée ici, l'élément électrique chauffant et l'organe déformable ne forment qu'une seule pièce. On comprend donc que, selon cette autre variante, l'organe de déformation de la première partie du déflecteur d'air comprend un matériau à mémoire de forme configuré pour chauffer lorsqu'il est parcouru par un courant électrique et pour se déformer lorsqu'il atteint sa température critique. Ainsi, le courant électrique appliqué à l'organe de déformation entraine une augmentation de la température de cet organe de déformation, et plus particulièrement du matériau à mémoire de forme qui constitue cet organe de déformation, et cette augmentation de la température résulte en une déformation de cet organe de déformation et donc en la déformation de la première partie du déflecteur d'air.

Il est entendu que les caractéristiques décrites ci-dessus en référence au premier et au deuxième modes de réalisation peuvent être combinées sans sortir du contexte de l'invention. En particulier, l'état de repos du déflecteur d'air 4 et l'état activé de ce déflecteur d'air 4 peuvent, pour chacun de ces modes de réalisation, correspondre alternativement à la première position 420 ou à la deuxième position 430 de la première partie 41 de ce déflecteur d'air 4.

La figure 8 illustre quant à elle, de façon schématique, les étapes permettant la déformation de la première partie du déflecteur d'air vers la première position ou vers la deuxième position.

Dans un premier temps, l'unité de contrôle 16 reçoit une première information 160 relative à la vitesse de déplacement du véhicule équipé du système d'essuyage selon l'invention. Cette unité de contrôle 16 est alors configurée pour comparer cette première information 160 à une valeur basse et à une valeur haute. En fonction des résultats de cette comparaison, l'unité de contrôle 16 est configurée pour envoyer, ou non, une instruction 161 permettant d'entrainer l'activation de l'organe de déformation.

Par exemple, la valeur basse avec laquelle l'unité de contrôle compare la vitesse à laquelle circule le véhicule peut correspondre à une vitesse de 80 km/h et la valeur haute avec laquelle l'unité de contrôle 16 compare la vitesse à laquelle circule le véhicule peut correspondre à une vitesse de 120 km/h. En effet, au-delà de 120 km/h et en deçà de 80 km/h, le phénomène de dépression d'air générer en aval du déflecteur d'air est quasiment supprimé de sorte qu'il est préférable de maintenir le déflecteur d'air dans sa deuxième position de sorte qu'il puisse exercer de façon optimale sa fonction de plaquage du balai d'essuyage sur le pare-brise. En revanche, tel que précédemment évoqué, lorsque le véhicule se déplace à une vitesse comprise entre 80 km/h et 120km/h, il est avantageux de déformer la première partie du déflecteur d'air vers sa première position afin de réduire ce phénomène de dépression d'air et donc d'optimiser la visibilité du conducteur tout au long de l'essuyage.

Avantageusement, l'unité de contrôle peut en outre être configurée pour recevoir une deuxième information 162 relative à une position angulaire du balai d'essuyage sur le pare-brise. L'unité de contrôle 16 est ensuite configurée pour comparer cette deuxième information 162 à une plage de valeurs angulaires et pour envoyer ou non, en conséquence, une instruction autorisant la circulation du courant électrique dans l'élément électriquement conducteur de sorte à déformer la première partie du déflecteur d'air vers sa première position ou vers sa deuxième position. Par exemple, la plage de valeurs angulaires correspond au secteur angulaire α du pare-brise décrit et illustré en référence à la figure 2. Tel que précédemment évoqué, ce secteur angulaire α est situé à proximité de la zone 13 décrite ci-dessus au niveau de laquelle peuvent s'accumuler l'eau et/ou le liquide lave-glace. On comprend alors que la première partie du déflecteur d'air est ainsi avantageusement déformée vers sa première position, uniquement dans ce secteur angulaire α du pare-brise. En dehors de ce secteur angulaire, la première partie du déflecteur d'air est ainsi maintenue dans sa deuxième position de sorte que le déflecteur d'air puisse remplir de façon optimale sa fonction de plaquage du balai d'essuyage contre le pare-brise.

Il est entendu que les valeurs de comparaison ne sont ici données qu'à titre d'exemple et que toute autre valeur est envisageable sans sortir du contexte de la présente invention. En effet, les vitesses d'apparition ainsi que la zone du pare-brise au niveau de laquelle peuvent s'accumuler l'eau et/ou le liquide lave-glace peuvent différer d'un véhicule à l'autre.

La présente invention propose ainsi un moyen efficace, peu coûteux et facilement adaptable à tous les types de véhicules, qui permet d'éviter l'accumulation d'eau et/ou de liquide lave-glace entre le balai d'essuyage dans sa position extrême et l'un des montants du pare-brise, assurant ainsi au conducteur du véhicule concerné une visibilité optimale tout au long de l'essuyage.

L'invention ne saurait toutefois se limiter aux moyens et configurations décrits et illustrés ici et elle s'étend également à tout moyen et configuration équivalents et à toute combinaison techniquement opérante de tels moyens. En particulier la forme et la disposition de l'organe de déformation du déflecteur d'air peuvent être modifiées sans nuire à l'invention dans la mesure où elles remplissent les fonctionnalités décrites dans le présent document.

## Revendications

1. Déflecteur d'air (4) pour balai d'essuyage (1), le déflecteur d'air (4) comprenant au moins une première partie (41) qui émerge d'une deuxième partie (40), et qui comprend au moins un organe de déformation (15) configuré pour entrainer une déformation de la première partie (41) du déflecteur d'air (4), cet organe de déformation (15) comprenant au moins un élément électriquement conducteur (150), le déflecteur d'air étant **caractérisé en ce que** l'organe de déformation (15) est noyé dans la masse du déflecteur d'air (4).

2. Déflecteur d'air (4) selon la revendication précédente, dans lequel la première partie (41) du déflecteur d'air (4) s'étend depuis la deuxième partie (40) et comprend une arête libre (410), la première partie (41) du déflecteur d'air (4) étant configurée pour se déformer entre une première position (420) et une deuxième position (430), une première distance (d) mesurée entre un point de l'arête libre (410) et un point de la deuxième partie (40) du déflecteur d'air (4) lorsque la première partie (41) est dans sa première position (420) étant inférieure à une deuxième distance (d') mesurée entre le même point de l'arête libre (410) et le même point de la deuxième partie (40) du déflecteur d'air (4) lorsque la première partie (41) est dans sa deuxième position (430).

3. Déflecteur d'air (4) selon l'une quelconque des revendications précédentes, dans lequel l'organe de déformation (15) comprend un matériau piézoélectrique.

4. Déflecteur d'air (4) selon l'une quelconque des revendications 1 à 3, dans lequel l'élément électriquement conducteur (150) de l'organe de déformation (15) est un élément électrique chauffant, dans lequel l'organe de déformation (15) comprend en outre un organe déformable (151) et dans lequel l'élément électrique chauffant est disposé au contact de l'organe déformable (151).

5. Déflecteur d'air (4) selon la revendication précédente, dans lequel l'organe de déformable (151) contre lequel l'élément électrique chauffant prend appui comprend un matériau à mémoire de forme.

6. Déflecteur d'air (4) selon l'une quelconque des revendications précédentes, dans lequel le déflecteur d'air (4) s'étend majoritairement selon un axe longitudinal (X) et dans lequel l'organe de déformation (15) s'étend majoritairement selon une direction d'extension parallèle à cet axe longitudinal (X).

7. Balai d'essuyage (1) comprenant au moins un organe de flexion (6), une lame d'essuyage (5) destinée à venir en appui contre une surface vitrée (11) et un déflecteur d'air (4) selon l'une quelconque des revendications précédentes, et dans lequel l'organe de flexion (6) s'étend au moins en partie dans la deuxième partie (40) du déflecteur d'air (4).

8. Système d'essuyage (3) pour un véhicule automobile comprenant au moins un balai d'essuyage (1) selon la revendication précédente et au moins une unité de contrôle (16) configurée pour autoriser ou interdire la circulation d'un courant électrique dans l'élément électriquement conducteur (150) de l'organe de déformation (15).

9. Procédé de déformation d'une première partie (41) d'un déflecteur d'air (4) intégré à un système d'essuyage (3) selon la revendication précédente, au cours duquel l'unité de contrôle (16) reçoit au moins une première information (160) relative à une vitesse de déplacement d'un véhicule comprenant le système d'essuyage (3), le procédé comprenant une première étape au cours de laquelle l'unité de contrôle (16) compare cette première information (160) à une valeur basse et à une valeur haute et une deuxième étape au cours de laquelle l'unité de contrôle (16) envoie une instruction (161) autorisant une circulation du courant électrique dans l'élément électriquement conducteur (150) quand la première information (160) est supérieure à la valeur basse et inférieure à la valeur haute, l'élément électriquement conducteur (150) n'étant pas alimenté quand la première information (160) est inférieure à la valeur basse ou supérieure à la valeur haute.

10. Procédé selon la revendication précédente, où, préalablement à la deuxième étape autorisant la circulation du courant électrique dans l'élément électriquement conducteur (150), l'unité de contrôle (16) reçoit une deuxième information (162) relative à une position angulaire du balai d'essuyage (1) sur la surface vitrée (11), le procédé comprenant une troisième étape au cours de laquelle l'unité de contrôle (16) compare cette deuxième information (162) à une plage de valeurs angulaires, la deuxième étape au cours de laquelle l'unité de contrôle (16) envoie l'instruction (161) autorisant une circulation du courant électrique dans l'élément électriquement conducteur (150) étant conditionnée à une correspondance entre la deuxième information (162) et la plage de valeurs angulaires.

## Patentansprüche

1. Luftleitblech (4) für einen Scheibenwischer (1), wobei das Luftleitblech (4) mindestens einen ersten Teil (41) beinhaltet, der aus einem zweiten Teil (40) hervorsteht und der mindestens ein Verformungsorgan (15) beinhaltet, das dazu konfiguriert ist, eine Verformung des ersten Teils (41) des Luftleitblechs (4) zu bewirken, wobei dieses Verformungsorgan (15) mindestens ein elektrisch leitendes Element (150) beinhaltet, wobei das Luftleitblech **dadurch gekennzeichnet ist, dass** das Verformungsorgan (15) in die Masse des Luftleitblechs (4) eingebettet ist.

2. Luftleitblech (4) nach dem vorhergehenden Anspruch, wobei sich der erste Teil (41) des Luftleitblechs (4) von dem zweiten Teil (40) erstreckt und eine freie Kante (410) beinhaltet, wobei der erste Teil (41) des Luftleitblechs (4) dazu konfiguriert ist, sich zwischen einer ersten Stellung (420) und einer zweiten Stellung (430) zu verformen, wobei ein erster Abstand (d), gemessen zwischen einem Punkt der freien Kante (410) und einem Punkt des zweiten Teils (40) des Luftleitblechs (4), wenn sich der erste Teil (41) in seiner ersten Stellung (420) befindet, kleiner ist als ein zweiter Abstand (d'), gemessen zwischen demselben Punkt der freien Kante (410) und demselben Punkt des zweiten Teils (40) des Luftleitblechs (4), wenn sich der erste Teil (41) in seiner zweiten Stellung (430) befindet.

3. Luftleitblech (4) nach einem der vorhergehenden Ansprüche, wobei das Verformungsorgan (15) ein piezoelektrisches Material beinhaltet.

4. Luftleitblech (4) nach einem der Ansprüche 1 bis 3, wobei das elektrisch leitende Element (150) des Verformungsorgans (15) ein elektrisches Heizelement ist, wobei das Verformungsorgan (15) ferner ein verformbares Organ (151) beinhaltet und wobei das elektrische Heizelement in Kontakt mit dem verformbaren Organ (151) angeordnet ist.

5. Luftleitblech (4) nach dem vorhergehenden Anspruch, wobei das verformbare Organ (151), an dem das elektrische Heizelement anliegt, ein Formgedächtnismaterial beinhaltet.

6. Luftleitblech (4) nach einem der vorhergehenden Ansprüche, wobei sich das Luftleitblech (4) im Wesentlichen gemäß einer Längsachse (X) erstreckt und wobei sich das Verformungsorgan (15) im Wesentlichen gemäß einer Erstreckungsachse, die zu dieser Längsachse (X) parallel ist, erstreckt.

7. Scheibenwischer (1), der mindestens ein Biegeorgan (6), ein Wischblatt (5), das dazu bestimmt ist, gegen eine Glasscheibe (11) zur Anlage zu kommen, und ein Luftleitblech (4) nach einem der vorhergehenden Ansprüche beinhaltet, und wobei sich das Biegeorgan (6) mindestens teilweise in dem zweiten Teil (40) des Luftleitblechs (4) erstreckt.

8. Wischsystem (3) für ein Kraftfahrzeug, das mindestens einen Scheibenwischer (1) nach dem vorhergehenden Anspruch und mindestens eine Steuereinheit (16), die dazu konfiguriert ist, das Fließen eines elektrischen Stroms in dem elektrisch leitenden Element (150) des Verformungsorgans (15) zu gestatten oder zu untersagen, beinhaltet.

9. Verfahren zur Verformung eines ersten Teils (41) eines Luftleitblechs (4), das in ein Wischsystem (3) nach dem vorhergehenden Anspruch integriert ist, während dessen die Steuereinheit (16) mindestens eine erste Information (160) über eine Fahrgeschwindigkeit eines Fahrzeugs, welches das Wischsystem (3) beinhaltet, empfängt, wobei das Verfahren Folgendes beinhaltet: einen ersten Schritt, während dessen die Steuereinheit (16) diese erste Information (160) mit einem unteren Wert und einem oberen Wert vergleicht, und einen zweiten Schritt, während dessen die Steuereinheit (16) eine Anweisung (161) sendet, die ein Fließen des elektrischen Stroms in dem elektrisch leitenden Element (150) gestattet, wenn die erste Information (160) größer als der untere Wert und kleiner als der obere Wert ist, wobei das elektrisch leitende Element (150) nicht mit Strom versorgt wird, wenn die erste Information (160) kleiner als der untere Wert oder größer als der obere Wert ist.

10. Verfahren nach dem vorhergehenden Anspruch, wobei die Steuereinheit (16) vor dem zweiten Schritt, der das Fließen des elektrischen Stroms in dem elektrisch leitenden Element (150) gestattet, eine zweite Information (162) über eine Winkelstellung des Scheibenwischers (1) auf der Glasscheibe (11) empfängt, wobei das Verfahren einen dritten Schritt beinhaltet, während dessen die Steuereinheit (16) diese zweite Information (162) mit einem Bereich von Winkelwerten vergleicht, wobei der zweite Schritt, während dessen die Steuereinheit (16) die Anweisung (161), die ein Fließen des elektrischen Stroms in dem elektrisch leitenden Element (150) gestattet, sendet, von einer Übereinstimmung zwischen der zweiten Information (162) und dem Bereich von Winkelwerten abhängt.

## Claims

1. Air deflector (4) for a windscreen wiper (1), the air deflector (4) comprising at least one first part (41) which emerges from a second part (40), and which comprises at least one deformation member (15) configured to drive a deformation of the first part (41) of the air deflector (4), this deformation member (15) comprising at least one electrically conductive element (150), the air deflector being **characterized in that** the deformation member (15) is embedded in the mass of the air deflector (4) .

2. Air deflector (4) according to the preceding claim, wherein the first part (41) of the air deflector (4) extends from the second part (40) and comprises a free edge (410), the first part (41) of the air deflector (4) being configured to be deformed between a first position (420) and a second position (430), a first distance (d) measured between a point of the free edge (410) and a point of the second part (40) of the air deflector (4) when the first part (41) is in its first position (420) being less than a second distance (d') measured between the same point of the free edge (410) and the same point of the second part (40) of the air deflector (4) when the first part (41) is in its second position (430).

3. Air deflector (4) according to either one of the preceding claims, wherein the deformation member (15) comprises a piezoelectric material.

4. Air deflector (4) according to any one of Claims 1 to 3, wherein the electrically conductive element (150) of the deformation member (15) is an electrical heating element, wherein the deformation member (15) further comprises a deformable member (151) and wherein the electrical heating element is positioned in contact with the deformable member (151).

5. Air deflector (4) according to the preceding claim, wherein the deformable member (151) against which the electrical heating element bears comprises a material with shape memory.

6. Air deflector (4) according to any one of the preceding claims, wherein the air deflector (4) extends mostly along a longitudinal axis (X) and wherein the deformation member (15) extends mostly in a direction of extension parallel to this longitudinal axis (X).

7. Windscreen wiper (1) comprising at least one bending member (6), a wiper blade (5) intended to bear against a glazed surface (11) and an air deflector (4) according to any one of the preceding claims, and wherein the bending member (6) extends at least partly in the second part (40) of the air deflector (4).

8. Wiper system (3) for a motor vehicle comprising at least one windscreen wiper (1) according to the preceding claim and at least one control unit (16) configured to allow or prevent the circulation of an electrical current in the electrically conductive element (150) of the deformation member (15) .

9. Method for deforming a first part (41) of an air deflector (4) incorporated in a wiper system (3) according to the preceding claim, during which the control unit (16) receives at least one first information item (160) relating to a speed of movement of a vehicle comprising the wiper system (3), the method comprising a first step during which the control unit (16) compares this first information item (160) to a low value and to a high value and a second step during which the control unit (16) sends an instruction (161) allowing a circulation of the electrical current in the electrically conductive element (150) when the first information item (160) is above the low value and below the high value, the electrically conductive element (150) not being powered when the first information item (160) is below the low value or above the high value.

10. Method according to the preceding claim, in which, prior to the second step allowing the circulation of the electrical current in the electrically conductive element (150), the control unit (16) receives a second information item (162) relating to an angular position of the windscreen wiper (1) on the glazed surface (11), the method comprising a third step during which the control unit (16) compares this second information item (162) to a range of angular values, the second step during which the control unit (16) sends the instruction (161) allowing a circulation of the electrical current in the electrically conductive element (150) being conditioned on a match between the second information item (162) and the range of angular values.
